# FASCICULE DE BREVET EUROPEEN

(11) **EP 3 756 973 B1**
(45) Date de publication et mention de la délivrance du brevet: **07.06.2023**
(21) Numéro de dépôt: 20182010.7
(22) Date de dépôt: 24.06.2020
(51) Int. Cl.: B62B 3/00, B62B 7/00

(54) **DISPOSITIF DE TRANSPORT TOUT-TERRAIN D'UN ENFANT EN POSITION ASSISE**
GELÄNDE-TRANSPORTVORRICHTUNG FÜR EIN KIND IN SITZENDER POSITION
DEVICE FOR ALL-TERRAIN TRANSPORT OF A CHILD IN A SEATED POSITION

(30) Priorité: 26.06.2019 FR 1906960
(43) Date de publication de la demande: 30.12.2020
(73) Titulaire: Ferriol-Matrat, 42230 Roche la Moliere (FR)
(72) Inventeur: FERRIOL, Pierre Marie, 42170 SAINT JUST SAINT RAMBERT (FR); ODIN, Jean-Christophe, 42320 Farnay (FR)
(74) Mandataire: Cabinet Laurent & Charras

(56) Documents cités:
- WO-A1-2018/054694
- DE-A1- 19 637 268
- DE-C- 864 443
- FR-A1- 2 987 815
- US-A- 597 337

## Description

### DOMAINE TECHNIQUE

La présente invention se rapporte au domaine technique du transport, tout-terrain, d'un enfant en position assise.

Par position assise, on entend que l'enfant est assis avec les cuisses posées sur une assise, et avec le dos en appui sur un dossier.

Par tout-terrain, on entend que le dispositif permet à un enfant la pratique de balade, randonnée, trekking, course à pied et similaire avec l'aide d'un accompagnateur.

Le dispositif est adapté au transport d'un enfant, par exemple d'un poids de l'ordre de 25 kg et moins, mais également aux enfants en bas âge, et aux enfants handicapés, c'est-à-dire à mobilité réduite.

### ART ANTERIEUR

Il est connu de l'état de la technique, et notamment du document FR 3 031 449, un dispositif de transport équipé d'une seule roue, ce qui lui permet de circuler facilement dans les sentiers mêmes les plus étroits. Le dispositif comprend un siège à adapter en fonction du handicap du passager, positionné au-dessus de la roue. Des brancards, situés à l'avant et à l'arrière, permettent à deux accompagnateurs de faire rouler et de diriger le dispositif de transport, et de le porter si nécessaire.

Ce dispositif donne entière satisfaction pour le transport, tout-terrain, d'une personne accompagnée de deux accompagnateurs.

Cependant, l'inconvénient de ce dispositif est qu'il nécessite la présence de deux accompagnateurs. Le document DE19637268A1 préconise d'abaisser le siège et de le positionner entre les roues de sorte que le centre de gravité est bas.

### EXPOSE DE L'INVENTION

L'un des buts de l'invention est donc de proposer un dispositif de transport, tout-terrain, d'un enfant en position assise ne nécessitant la présence que d'une seule personne pour faire rouler et diriger le dispositif.

Un autre objectif de l'invention est de fournir un tel dispositif, dont l'utilisation est simple et sécurisée, et dont le transport et le rangement sont facilités.

À cet effet, il a été mis au point un dispositif de transport, tout-terrain, d'un enfant en position assise, remarquable en ce qu'il comprend un châssis comprenant :
- une roue avant et une roue arrière, positionnées l'une derrière l'autre et dans un même plan ;
- des moyens de réception d'une coque dorsale ou corset-siège d'un enfant handicapé, ou d'un siège amovible, positionnés au-dessus et entre les axes des roues avant et arrière ;
- une potence de guidage s'étendant verticalement derrière les moyens de réception et de manière inclinée vers l'arrière et au-dessus de la roue arrière, la potence étant terminée par un guidon manoeuvrable par une personne se tenant debout derrière le dispositif.

De cette manière, le dispositif selon l'invention permet à une seule personne de transporter un enfant en manoeuvrant le guidon du dispositif. Le fait que les roues avant et arrière sont alignées l'une derrière l'autre permet, d'une part, d'augmenter la stabilité du dispositif et faciliter sa manipulation par une seule personne et, d'autre part, de pouvoir se faufiler aisément sur des sentiers, par exemple rocailleux.

En balade, le conducteur peut prendre des virages en faisant pencher le dispositif, tandis qu'à l'arrêt, le conducteur peut faire levier avec la potence pour lever la roue avant et faire tourner le dispositif.

Par ailleurs, les moyens de réception peuvent recevoir soit un siège, soit une coque dorsale ou corset-siège, c'est-à-dire que le siège peut être retirée pour positionner un enfant handicapé équipé d'un corset-siège, ou d'une coque dorsale rigide faisant directement office d'assise pour l'enfant. Le dispositif peut également être évolutif en changeant le type de siège.

De préférence, la roue avant est folle, c'est-à-dire libre de pivoter autour d'un axe sensiblement vertical, afin de faciliter la manipulation et la direction du dispositif.

Toujours dans un but de faciliter la direction du dispositif, la roue avant est reliée au châssis par l'intermédiaire d'une fourche présentant une chasse vers l'arrière, de sorte que lorsque le dispositif roule vers l'avant, l'orientation de la roue avant reste stable et répond au balancement et pivotement du guidon par le conducteur pour manoeuvrer et diriger de manière optimale le dispositif.

Selon une forme de réalisation particulière, et toujours dans un but d'apporter plus de stabilité au dispositif, la roue avant présente un diamètre inférieur à celui de la roue arrière, et la roue avant et la roue arrière sont espacées l'une de l'autre d'une distance inférieure à 20 cm, et de préférence inférieure à 10 cm, voire inférieure à 5 cm.

Selon une forme de réalisation particulière, et pour diminuer l'encombrement du dispositif, en vue de faciliter son stockage et son transport, la potence est montée pivotante par rapport au châssis pour passer d'une position déployée d'utilisation à une position repliée sensiblement horizontale et pivotée vers le châssis.

Selon une forme de réalisation particulière, les moyens de réception de la coque dorsale ou corset-siège, ou du siège, sont sous la forme d'un berceau relié de manière pivotante au châssis pour passer d'une position déployée d'utilisation à une position repliée pivotée vers le châssis.

Le siège est amovible, de sorte que pour replier le dispositif, il convient en premier lieu de retirer le siège.

Dans le mode de réalisation précédent, la potence est avantageusement assujettie au berceau, de sorte que le passage de la potence en position d'utilisation entraîne le passage du berceau en position d'utilisation.

Par exemple, le dispositif peut comprendre une tige de liaison terminée par une collerette de verrouillage, la tige s'étend depuis une extrémité inférieure de la potence. Le berceau, quant à lui, comprend une plaque de liaison en forme de fourche adaptée pour recevoir la tige de liaison entre ses branches lors du passage de la potence en position d'utilisation. Le berceau étant notamment passé en position d'utilisation par l'emprise de la collerette avec les branches de la fourche. Lors du basculement vers l'arrière de la potence, la collerette vient soulever la plaque de liaison et donc passer le berceau en position d'utilisation.

De préférence, la potence comprend des moyens de verrouillage de sa position d'utilisation. Par exemple, les moyens de verrouillage se présentent sous la forme d'une tôle ressort positionnée au niveau du fond de la fente définie entre les branches de la plaque de liaison, la tôle ressort présentant un orifice dans lequel la collerette de la tige est destinée à venir s'insérer, et notamment s'encliqueter par l'effet ressort de la tôle, lorsque la potence est passée en position d'utilisation.

Avantageusement, et pour optimiser le confort d'utilisation du dispositif sur des sentiers accidentés, les roues avant et arrière sont reliées au châssis de manière amortie.

La roue avant et la roue arrière sont chacune reliées au châssis par un bras oscillant, les bras oscillants étant de préférence reliés entre eux par un amortisseur commun.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées, dans lesquelles :
[Fig. 1] la figure 1 est une représentation schématique illustrant, de côté, le dispositif selon l'invention en position d'utilisation, et recevant un siège pour recevoir un enfant en position assise ;
[Fig. 2] la figure 2 est une représentation schématique similaire à celle de la figure 1, le dispositif étant représenté en perspective, le siège amovible ayant été retiré ;
[Fig. 3] la figure 3 est une représentation schématique similaire à celle de la figure 2, en cours de repliage ;
[Fig. 4] la figure 4 est une représentation schématique illustrant en détail une zone référencée A sur la figure 3, montrant l'assujettissement entre la potence de guidage et le berceau supportant le siège amovible ;
[Fig. 5] la figure 5 est une représentation schématique illustrant le dispositif selon l'invention en position repliée ;
[Fig. 6] la figure 6 est une représentation schématique illustrant en détail une zone référencée B sur la figure 5, illustrant différents points de butée de la position repliée.

### DESCRIPTION DETAILLEE DE L'INVENTION

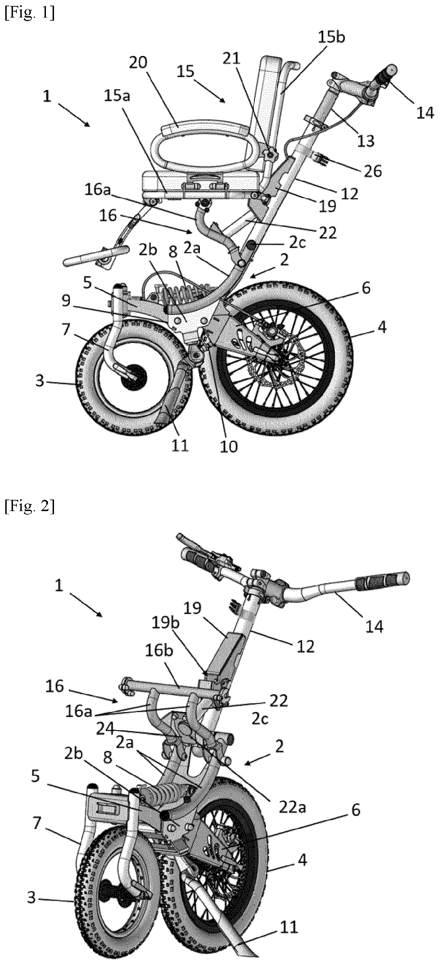

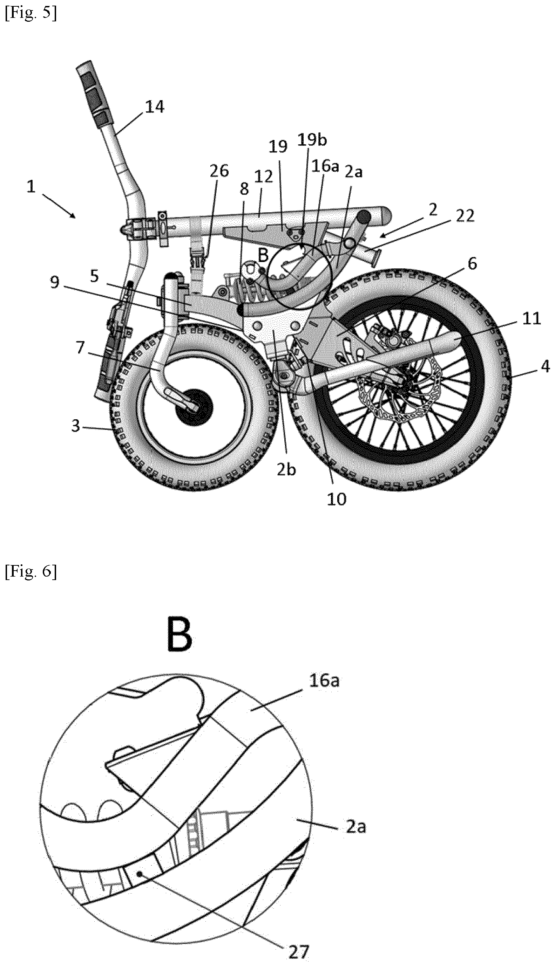

En référence aux figures 1 à 6, l'invention concerne un dispositif (1) de transport, tout-terrain, d'un enfant en position assise.

Le dispositif (1) est particulièrement adapté pour le transport d'un enfant, ou plus généralement d'une personne présentant un poids inférieur à 25 kg. Le dispositif (1) pourrait supporter des personnes plus lourdes, en fonction des capacités physiques de l'accompagnateur qui manoeuvre et dirige le dispositif (1).

À cet effet, le dispositif (1) comprend un châssis (2) auquel sont reliés deux roues (3, 4), par l'intermédiaire de deux bras oscillants (5, 6). De préférence, la roue avant (3) d'un diamètre de 12 pouces présente un diamètre inférieur à celui de 16 pouces de la roue arrière (4), et la roue avant (3) et la roue arrière (4) sont espacées l'une de l'autre d'une distance inférieure à 20 cm, par exemple une distance de 1,5 cm. L'entraxe entre les roues avant (3) et arrière (4) est par exemple compris entre 30 et 40 cm, et par exemple de 37.6 cm.

Plus précisément, le châssis (2) comprend une roue avant (3), reliée au châssis (2) par un bras oscillant avant (5), et une roue arrière (4), reliée au châssis (2) par un bras oscillant arrière (6).

Le bras oscillant avant (5) est relié à la roue avant (3) par l'intermédiaire d'une fourche (7) présentant une chasse vers l'arrière pour faciliter et stabiliser le déplacement vers l'avant du dispositif (1).

Selon une autre caractéristique de l'invention, la roue avant (3) et la roue arrière (4) sont positionnées l'une derrière l'autre, et dans le même plan vertical, notamment lorsque le dispositif (1) roule en marche avant et en ligne droite.

La fourche (7) de la roue avant (3) est reliée au bras oscillant avant (5) par l'intermédiaire d'une liaison pivot autorisant la roue avant (3) à pivoter librement autour d'un axe sensiblement vertical.

Selon une autre caractéristique avantageuse de l'invention, le bras oscillant avant (5) est relié au bras oscillant arrière (6) par un amortisseur (8) commun, pour amortir le débattement des bras oscillants avant (5) et arrière (6), et donc le mouvement des roues (3, 4). Les bras oscillants sont reliés à l'amortisseur (8) de manière articulée.

Selon une forme de réalisation particulière, le châssis (2) est composé de deux tubes (2a) parallèles et cintrés, supportés et reliés en partie inférieure par une armature (2b) en U. Les deux branches de la forme en U de l'armature (2b) sont reliées, en partie supérieure, chacune à un tube (2a) cintré du châssis (2). Les parois latérales des branches du U sont, quant à elle, chacune reliée au niveau d'une partie avant, de manière pivotante au bras oscillant avant (5) et, en parti arrière, de manière pivotante, au bras oscillant arrière (6).

En partie avant, les deux branches de l'armature (2b) en U sont reliées entre elles par une plaque de liaison, formant une butée (9) au bras oscillant avant (5), repoussée par l'amortisseur (8). La base de la forme en U de l'armature (2b) est prolongée vers l'arrière par une plaque en saillie repliée vers le bas et formant une butée d'arrêt (10) pour le débattement du bras oscillant arrière (6), repoussée par l'amortisseur (8).

Avantageusement, la base de la forme en U de l'armature (2b) comprend une béquille latérale (11), adaptée pour passer d'une position repliée à une position déployée de stationnement.

Les extrémités supérieures des tubes (2a) cintrés du châssis (2) sont reliées entre elles par une traverse (2c) montée pivotante autour de son axe, et de laquelle s'étend une potence (12) de guidage. Plus précisément, la potence (12) de guidage s'étend verticalement et de manière inclinée vers l'arrière est au-dessus de la roue arrière (4). La potence (12) de guidage est de préférence tubulaire, et reçoit intérieurement et de manière télescopique un tube plongeur (13) lui-même terminé par un guidon (14) de vélo. Le coulissement du tube plongeur (13) à l'intérieur de la potence (12) permet de régler la hauteur du guidon (14) en fonction de la taille du conducteur. Le guidon (14) permet alors de manoeuvrer, de conduire et de diriger le dispositif (1) selon l'invention.

De manière connue, le guidon (14) présente une gâchette de frein, reliée par l'intermédiaire d'une durite et d'un fluide aux mâchoires d'un étrier enserrant un disque de frein assujetti à la roue arrière (4).

La potence (12) est montée pivotante par rapport au châssis (2), notamment autour de la traverse (2c) pour passer d'une position déployée d'utilisation, à une position repliée, sensiblement horizontale, et pivotée vers l'avant et vers le châssis (2).

Le châssis (2) comprend également des moyens de réception d'un siège (15) amovible, ou bien d'une coque dorsale ou corset-siège d'un enfant handicapé, positionnés au-dessus et entre les axes des roues avant (3) et arrière (4).

Les moyens de réception se présentent sous la forme d'un berceau (16) relié de manière pivotante au châssis (2). Plus précisément, le berceau (16) comprend deux tubes profilés (16a), parallèles, chacun articulé à une extrémité supérieure d'un tube cintré (2a) du châssis (2).

Les tubes profilés (16a) du berceau (16) sont reliés entre eux au niveau d'une extrémité opposée à l'extrémité articulée, par une traverse de liaison (16b). La traverse de liaison (16b) comprend à chacune de ses extrémités des flasques équipés d'encoches dans lesquelles sont destinés à venir s'insérer des éléments complémentaires positionnés sur la face inférieure du siège (15) amovible ou de la coque dorsale ou corset-siège d'un enfant handicapé. La potence (12) comprend, en regard du berceau (16), un sabot (19) équipé d'une fente transversale (19b), destinée à recevoir en engagement un élément complémentaire positionné sur la face inférieure du siège (15) amovible ou de la coque dorsale ou corset-siège, pour former un troisième point d'appui et de verrouillage du siège (15) ou de la coque dorsale ou corset-siège.

Ce qui précède, le siège (15) est positionné sur la traverse de liaison (16b), en appui contre le sabot (19). Le sabot (19) comprend des moyens de verrouillage de l'engagement de l'élément complémentaire du siège (15) ou de la coque dorsale ou corset-siège dans la fente transversale (19b).

Le siège (15) ou la coque dorsale ou corset-siège sont alors amovibles, en déverrouillant les moyens de verrouillage du sabot (19). Le siège (15) présente avantageusement une ossature tubulaire pour former une assise (15a) et un dossier (15b) recevant de préférence des garnitures ou des coussins pour le confort de l'enfant. Le siège (15) comprend des accoudoirs (20) montés articulés pour s'ouvrir latéralement, ou bien se replier dans un plan vertical en position d'utilisation. Le dossier (15b) est monté avec inclinaison réglable, notamment au moyen des deux vis latérales assujetties à des molettes (21) se déplaçant dans des lumières oblongues ménagées dans des plaques solidaires des accoudoirs (20). L'assise (15a) est prolongée en partie avant par un repose pieds, dont l'inclinaison est réglable pour s'adapter à la morphologie de l'enfant.

L'homme du métier saura adapter les moyens de réception pour recevoir, de manière amovible, tout type de coque rigide d'un enfant handicapé.

De ce qui précède, le berceau (16) est relié de manière pivotante au châssis (2) pour passer d'une position déployée d'utilisation à une position repliée, par exemple horizontale, pivotée vers l'avant et vers le châssis (2).

De préférence, la potence (12) est assujettie au berceau (16), de sorte que le passage de la potence (12) en position d'utilisation entraîne, automatiquement, le passage du berceau (16) en position d'utilisation.

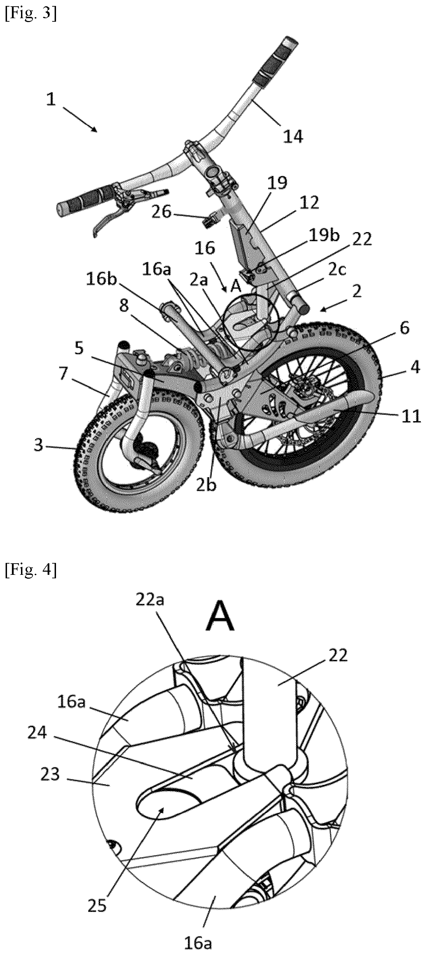

En référence à la figure 4, la potence (12) comprend une tige de liaison (22) terminée par une collerette (22a) de verrouillage, la tige (22) s'étendant vers le bas et de manière inclinée vers l'avant depuis une extrémité inférieure de la potence (12).

De manière complémentaire, le berceau (16) comprend une plaque de liaison (23) en forme de fourche définissant ainsi deux branches latérales et une fente. La plaque de liaison (23) est adaptée pour recevoir la tige de liaison (22) entre ses branches lors du passage de la potence (12) en position d'utilisation.

Le berceau (16) est alors passé en position d'utilisation par l'emprise de la collerette (22a) qui soulève, lors du pivotement de la potence (12) vers l'arrière, les branches de la fourche de la plaque de liaison (22).

Afin de verrouiller l'ensemble, et notamment la potence (12) en position d'utilisation, la potence (12) comprend des moyens de verrouillage sous la forme d'une tôle ressort (24) positionnée au fond de la fente de la plaque de liaison (23). La tôle ressort (24) est positionnée d'une manière sensiblement parallèle à la plaque de liaison (23), et présente un orifice (25) dans lequel la collerette (22a) est destinée à venir s'engager, et notamment s'encliqueter sous l'effet ressort de la tôle (24), lorsque la potence (12) est en position d'utilisation.

Afin de déverrouiller la position d'utilisation de la potence (12), il convient de tirer la tôle (24) vers l'arrière pour faire échapper la collerette (22a) de l'emprise de ladite tôle (24), et autoriser le basculement de la potence (12) en avant et vers le châssis (2).

Pour diminuer l'encombrement du dispositif (1) en position repliée, le guidon (14) peut pivoter à 90°.

D'une manière avantageuse, et afin de verrouiller la position repliée, la potence (12) et le bras oscillant avant (5) comprennent des moyens de verrouillage complémentaires. Par exemple, la potence (12) et le bras oscillant avant (5) comprennent chacun une sangle (26) équipée de moyens d'encliquetage complémentaires.

Selon une forme de réalisation particulière, le barycentre du dispositif (1) se trouve au-dessus des roues (3, 4), sous le berceau (16), au droit de la collerette (22a). L'axe de la roue avant (3) est positionnée, en projection dans un plan horizontal, à une distance comprise entre 210 et 250 mm, par exemple environ 233 mm du barycentre, tandis que l'axe de la roue arrière (4) est positionné à une distance comprise entre 120 et 160 mm, par exemple 143 mm du barycentre. La hauteur du barycentre se trouve par exemple à une distance comprise entre 450 et 490 mm, par exemple environ 470 mm du sol.

En position repliée, le berceau (16) vient buter contre des patins (27) élastomères positionnés sur les tubes (2a) cintrés du châssis (2), et la potence (12) contre la plaque de liaison (23) du berceau (16).

Il ressort de ce qui précède que l'invention fournit bien un dispositif (1) de transport, tout-terrain, d'un enfant en position assise. Le dispositif (1) est stable, maniable par une seule personne, et présente un encombrement réduit. Le dispositif (1) peut notamment être replié pour faciliter son rangement et son déplacement.

## Revendications

1. Dispositif (1) de transport tout-terrain d'un enfant en position assise comportant un châssis (2) comprenant :
- une roue avant (3) et une roue arrière (4) positionnées l'une derrière l'autre et dans un même plan ;
- des moyens de réception d'une coque dorsale ou corset siège d'un enfant handicapé, ou d'un siège (15) amovible, positionnés entre les axes des roues avant (3) et arrière (4) ;
- une potence (12) de guidage s'étendant verticalement derrière les moyens de réception et de manière inclinée vers l'arrière et au-dessus de la roue arrière (4), la potence (12) étant terminée par un guidon (14) manoeuvrable par une personne se tenant debout derrière le dispositif (1).
***caractérisé* en ce que** :
- la roue avant (3) et la roue arrière (4) sont espacées l'une de l'autre d'une distance inférieure à 20 cm, et **en ce que** les moyens de réception d'une coque dorsale ou corset siège d'un enfant handicapé, ou d'un siège (15) amovible sont positionnés au-dessus des roues avant (3) et arrière (4) ;
- la roue avant (3) et la roue arrière (4) sont chacune reliée au châssis (2) par un bras oscillant (5, 6), les bras oscillants (5, 6) étant reliés entre eux par un amortisseur (8) commun.

2. Dispositif (1) selon la revendication 1, ***caractérisé* en ce que** la roue avant (3) est libre de pivoter autour d'un axe vertical.

3. Dispositif (1) selon l'une des revendications précédentes, ***caractérisé* en ce que** la roue avant (3) est reliée au châssis (2) par une fourche (7) présentant une chasse vers l'arrière.

4. Dispositif (1) selon l'une des revendications précédentes, ***caractérisé* en ce que** la roue avant (3) présente un diamètre inférieur à celui de la roue arrière (4), et la roue avant (3) et la roue arrière (4) sont espacées l'une de l'autre d'une distance inférieure à 20 cm.

5. Dispositif (1) selon l'une des revendications précédentes, ***caractérisé* en ce que** la potence (12) est montée pivotante par rapport au châssis (2) pour passer d'une position déployée d'utilisation à une position repliée horizontale pivotée vers le châssis (2).

6. Dispositif (1) selon l'une des revendications précédentes, ***caractérisé* en ce que** les moyens de réception sont sous la forme d'un berceau (16) relié de manière pivotante au châssis (2) pour passer d'une position déployée d'utilisation à une position repliée pivotée vers le châssis (2).

7. Dispositif (1) selon les revendications 5 et 6, ***caractérisé* en ce que** la potence (12) est assujettie au berceau (16), de sorte que le passage de la potence (12) en position d'utilisation entraine le passage du berceau (16) en position d'utilisation.

8. Dispositif (1) selon la revendication 7, ***caractérisé* en ce qu'**une tige de liaison (22) terminée par une collerette (22a) de verrouillage s'étend depuis une extrémité inférieure de la potence (12), le berceau (16) comprend une plaque de liaison (23) en forme de fourche adaptée pour recevoir la tige de liaison (22) entre ses branches lors du passage de la potence (12) en position d'utilisation, le berceau (16) étant passé en position d'utilisation par l'emprise de la collerette (22a) avec les branches de la fourche.

9. Dispositif (1) selon la revendication 8, ***caractérisé,* en ce que** la potence (12) comprend des moyens de verrouillage de sa position d'utilisation, sous la forme d'une tôle ressort (24) positionnée au fond de la fente définie entre les branches de la plaque de liaison (23), la tôle ressort (24) présentant un orifice (25) dans lequel la collerette (22a) de la tige (22) est destinée à venir s'encliqueter lorsque la potence (12) est en position d'utilisation.

## Patentansprüche

1. Vorrichtung (1) zum geländegängigen Transport eines Kindes in sitzender Position mit einem Rahmen (2) mit:
- einem Vorderrad (3) und einem Hinterrad (4), die hintereinander und in einer gemeinsamen Ebene angeordnet sind ;
- Mittel zur Aufnahme einer Rückenschale oder eines Sitzkorsetts eines behinderten Kindes oder eines abnehmbaren Sitzes (15), die zwischen den Achsen des Vorderrads (3) und des Hinterrads (4) positioniert sind ;
- einen Führungsarm (12), der sich vertikal hinter den Aufnahmemitteln und schräg nach hinten und über das Hinterrad (4) erstreckt, wobei der Arm (12) in einem Lenker (14) endet, der von einer hinter der Vorrichtung (1) stehenden Person bedient werden kann.
***dadurch gekennzeichnet,* dass**:
- das Vorderrad (3) und das Hinterrad (4) in einem Abstand von weniger als 20 cm voneinander entfernt sind, und dass die Mittel zur Aufnahme einer Rückenschale oder eines Sitzkorsetts eines behinderten Kindes oder eines abnehmbaren Sitzes (15) über dem Vorderrad (3) und dem Hinterrad (4) positioniert sind ;
- das Vorderrad (3) und das Hinterrad (4) jeweils über einen Schwingarm (5, 6) mit dem Rahmen (2) verbunden sind, wobei die Schwingarme (5, 6) über einen gemeinsamen Stoßdämpfer (8) miteinander verbunden sind.

2. Vorrichtung (1) nach Anspruch 1, ***dadurch gekennzeichnet,* dass** das Vorderrad (3) frei um eine vertikale Achse schwenkbar ist.

3. Vorrichtung (1) nach einem der vorhergehenden Ansprüche, ***dadurch gekennzeichnet,* dass** das Vorderrad (3) mit dem Rahmen (2) über eine Gabel (7) verbunden ist, die einen Nachlauf nach hinten aufweist.

4. Vorrichtung (1) nach einem der vorhergehenden Ansprüche, ***dadurch gekennzeichnet,* dass** das Vorderrad (3) einen kleineren Durchmesser als das Hinterrad (4) aufweist und das Vorderrad (3) und das Hinterrad (4) in einem Abstand von weniger als 20 cm zueinander angeordnet sind.

5. Vorrichtung (1) nach einem der vorhergehenden Ansprüche, ***dadurch gekennzeichnet,* dass** der Arm (12) in Bezug auf das Rahmen (2) schwenkbar angebracht ist, um von einer ausgefahrenen Gebrauchsstellung in eine horizontale, zum Rahmen (2) hin geschwenkte, zusammengeklappte Stellung zu gelangen.

6. Vorrichtung (1) nach einem der vorhergehenden Ansprüche, ***dadurch gekennzeichnet,* dass** die Aufnahmemittel in Form einer Wiege (16) vorliegen, die schwenkbar mit dem Rahmen (2) verbunden ist, um von einer ausgefahrenen Gebrauchsstellung in eine zum Rahmen (2) hin geschwenkte, eingeklappte Stellung zu gelangen.

7. Vorrichtung (1) nach den Ansprüchen 5 und 6, ***dadurch gekennzeichnet,* dass** der Arm (12) an der Wiege (16) befestigt ist, so dass der Übergang des Arm (12) in die Gebrauchsposition den Übergang der Wiege (16) in die Gebrauchsposition mit sich bringt.

8. Vorrichtung (1) nach Anspruch 7, ***dadurch gekennzeichnet,* dass** sich eine Verbindungsstange (22), die in einem Verriegelungsflansch (22a) endet, von einem unteren Ende des Arm (12) aus erstreckt, die Wiege (16) eine Verbindungsplatte (23) in Form einer Gabel umfasst, die dazu geeignet ist, die Verbindungsstange (22) zwischen ihren Schenkeln aufzunehmen, wenn der Arm (12) in die Gebrauchsstellung übergeht, wobei die Wiege (16) durch den Eingriff des Verriegelungsflansch (22a) mit den Schenkeln der Gabel in die Gebrauchsstellung übergegangen ist.

9. Vorrichtung (1) nach Anspruch 8, ***dadurch gekennzeichnet,* dass** der Arm (12) Mittel zur Verriegelung seiner Gebrauchsstellung in Form eines Federblechs (24) umfasst, das am Boden des zwischen den Schenkeln der Verbindungsplatte (23) definierten Schlitzes positioniert ist, wobei das Federblech (24) eine Öffnung (25) aufweist, in die der Verriegelungsflansch (22a) des Verbindungsstange (22) einrasten soll, wenn sich der Arm (12) in der Gebrauchsstellung befindet.

## Claims

1. Device (1) for off-road transport of a child in a seated position comprising a frame (2) including:
- a front wheel (3) and a rear wheel (4) positioned one behind the other and in the same plane ;
- means for receiving a backrest or seat corset of a disabled child, or a removable seat (15), positioned between the axis of the front (3) and rear (4) wheels;
- a guiding bracket (12) extending vertically behind the receiving means and sloping backwards and above the rear wheel (4), the bracket (12) being terminated by a handlebar (14) maneuverable by a person standing behind the device (1)
***characterized* in that** :
- the front wheel (3) and the rear wheel (4) are spaced apart from each other by a distance of less than 20 cm, and **in that** the means for receiving a backrest or seat corset of a disabled child, or a removable seat (15) are positioned above the front (3) and rear (4) wheels;
- the front wheel (3) and the rear wheel (4) are each connected to the frame (2) by a swinging arm (5, 6), the swinging arms (5, 6) being connected to each other by a common shock absorber (8).

2. Device (1) according to claim 1, ***characterized* in that** the front wheel (3) is free to pivot about a vertical axis.

3. Device (1) according to one of the preceding claims, ***characterized* in that** the front wheel (3) is connected to the frame (2) by a fork (7) having a rearward caster.

4. Device (1) according to one of the preceding claims, ***characterized* in that** the front wheel (3) has a diameter smaller than that of the rear wheel (4), and the front wheel (3) and the rear wheel (4) are spaced apart from each other by a distance of less than 20 cm.

5. Device (1) according to any of the preceding claims, ***characterized* in that** the bracket (12) is pivotally mounted with respect to the frame (2) to move from an extended position of use to a horizontal folded position pivoted toward the frame (2).

6. Device (1) according to any of the preceding claims, ***characterized* in that** the receiving means are in the form of a cradle (16) pivotally connected to the frame (2) to move from an extended position of use to a folded position pivoted to the frame (2).

7. A device (1) according to claims 5 and 6, ***characterized* in that** the bracket (12) is secured to the cradle (16), such that moving the bracket (12) to the use position causes the cradle (16) to move to the use position.

8. Device (1) according to claim 7, ***characterized* in that** a connecting rod (22) terminated by a locking collar (22a) extends from a lower end of the bracket (12), the cradle (16) comprises a connecting plate (23) in the form of a fork adapted to receive the connecting rod (22) between its branches when the bracket (12) passes into the position of use, the cradle (16) being passed into the position of use by the engagement of the collar (22a) with the branches of the fork.

9. Device (1) according to claim 8, ***characterized* in that** the bracket (12) comprises means for locking its position of use, in the form of a spring plate (24) positioned at the bottom of the slot defined between the arms of the connecting plate (23), the spring plate (24) having an orifice (25) in which the collar (22a) of the rod (22) is intended to snap in when the bracket (12) is in the position of use.
